# EUROPÄISCHE PATENTSCHRIFT

(11) **EP 0 543 845 B1**
(45) Veröffentlichungstag und Bekanntmachung des Hinweises auf die Patenterteilung: **01.02.1995**
(21) Anmeldenummer: 91914121.8
(22) Anmeldetag: 07.08.1991
(51) Int. Cl.: C07F 9/30, C07F 9/38

(54) **VERFAHREN ZUR HERSTELLUNG VON AMINOMETHANPHOSPHONSÄURE UND AMINOMETHYL-PHOSPHINSÄUREN**
PROCESS FOR PRODUCING AMINOMETHANEPHOSPHONIC ACID AND AMINOMETHYLPHOSPHINIC ACIDS
PROCEDE DE PRODUCTION D'ACIDE PHOSPHONIQUE D'AMINOMETHANE ET D'ACIDES PHOSPHINIQUES D'AMINOMETHYLE

(30) Priorität: 17.08.1990 DE 4026027
(43) Veröffentlichungstag der Anmeldung: 02.06.1993
(73) Patentinhaber: Hoechst Schering AgrEvo GmbH, 13509 Berlin (DE)
(72) Erfinder: KLEINER, Hans-Jerg, D-6242 Kronberg (DE)
(86) Internationale Anmeldenummer: EP9101494
(87) Internationale Veröffentlichungsnummer: WO9203449

(56) Entgegenhaltungen:
- EP-A- 0 370 992
- DE-A- 3 824 961
- Chemical Abstracts, vol. 107, No. 5, 3. August 1987, Columbus, Ohio, US; abstract No. 39933, PULWER M.J.: "a convenient synthesis of aminomethylphosphonic acid" see abstract
- SYNTHESIS, No. 7 1989, STUTTGART DE pages 547-548; SOROKA M.: "comments on the synthesis of aminomethylphosphonic, see whole document

## Beschreibung

Von Aminomethanphosphonsäure sind herbizide und pflanzenwachtumsregulierende Wirkungen bekannt; Aminomethyl-phosphinsäuren sind ebenfalls technisch wertvolle Verbindungen mit biologischer Aktivität oder verwendbar als Zwischenprodukte zur Herstellung biologisch aktiver Verbindungen (siehe den Artikel von L. Maier "Advances in the Chemistry of Aminophosphinic Acids" in der Zeitschrift "Phosphorus and Sulfur" 1983, Vol. 14, S. 295-322, insbesondere 317-323 und dort zitierte Literatur). Aminomethanphosphonsäure ist weiterhin wertvoll als Zwischenprodukt zur Herstellung von N-Phosphonomethylglycin (siehe EP-A-214578).

Aminomethanphosphonsäure ist aus Acylaminomethanphosphonsäuren durch Hydrolyse mit Salzsäure herstellbar (US-A-2304156; US-A-2328358; M. Soroka, Synthesis 1989, 547). Ein Nachteil dieses Verfahrens besteht darin, daß die Aminomethanphosphonsäure nicht ohne besondere Maßnahmen bei der Aufarbeitung in hoher Ausbeute zu gewinnen ist. So beschreibt M. Soroka eine Aufarbeitung mit Hilfe von Pyridin oder Propylenoxid, die die Trennung des Chlorwasserstoffs von der Aminomethanphosphonsäure bewirken. Nachteilig ist weiterhin, daß die Acylaminomethanphosphonsäuren ohne aufwendige Hochreinigung herstellungsbedingt Spuren von Formaldehyd enthalten. Durch die Behandlung mit Salzsäure bei der Hydrolyse entsteht dann als unerwünschtes Nebenprodukt Bischlormethylether, der eindeutig als krebserzeugender Arbeitsstoff ausgewiesen ist. Gesucht sind daher im industriellen Maßstab durchführbare Hydrolyseverfahren, die die Bildung des Nebenproduktes Bischlormethylether ausschließen.

Gegenstand der Erfindung ist ein Verfahren zur Herstellung von Verbindungen der Formel I, 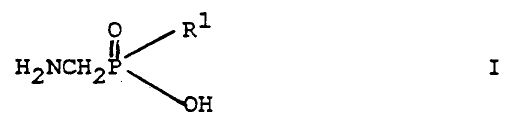
worin R¹ Hydroxy, C₁-C₄-Alkyl, vorzugsweise C₁-C₂-Alkyl, insbesondere Methyl, oder Phenyl bedeutet, dadurch gekennzeichnet, daß man Acylaminomethanphosphon- bzw. Acylaminomethylphosphinsäuren der allgemeinen Formel II, 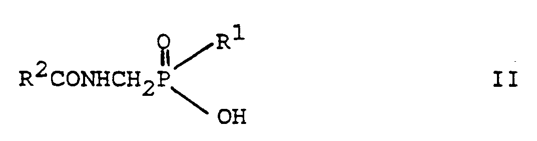
worin R² Wasserstoff, Alkyl mit 1 bis 6 C-Atomen, vorzugsweise mit 1 bis 3 C-Atomen, Benzyl oder Phenyl, das unsubstituiert oder durch ein oder mehrere Reste aus der Gruppe C₁-C₄-Alkyl, C₁-C₄-Alkoxy und Halogen substituiert ist, bedeutet und R¹ die obengenannte Bedeutung hat, mit Wasser bei 80 bis 300°C, vorzugsweise 150 bis 250°C, umsetzt.

Die Ausgangsstoffe der allgemeinen Formel II sind teilweise bekannt oder teilweise analog bekannten Methoden zugänglich. Beispielsweise können die Acylaminomethanphosphonsäuren der Formel II aus N-(Hydroxymethyl)-amiden und PCl₃ hergestellt werden (siehe US-A-2,328,358; US-A-2,304,156 oder M. Soroka, Synthesis 1989, 547 und dort zitierte Literatur).

Die Acylaminomethanphosphonsäuren als auch die Acylaminomethyl-phosphinsäuren der Formel II können im übrigen nach dem Verfahren aus der Deutschen Patentanmeldung P 40 26 026.7 hergestellt werden.

Bevorzugte Ausgangsstoffe der Formel II sind beispielsweise Formylaminomethanphosphonsäure,
Acetylaminomethanphosphonsäure,
Benzoylaminomethanphosphonsäure,
(Acetylaminomethyl)-(methyl)-phosphinsäure und
(Benzoylaminomethyl)-(phenyl)-phosphinsäure.

Die Ausgangsstoffe der Formel II werden mit Wasser, gegebenenfalls mit einem Überschuß an Wasser, versetzt und auf Reaktionstemperatur gebracht, wobei erforderlichenfalls in Abhängigkeit von der Temperatur unter Druck gearbeitet wird.

Die Höhe des Überschusses an Wasser ist für die Reaktion nicht besonders kritisch; beispielsweise kann aus Gründen der besseren Handhabbarkeit ein 2 bis 30-molarer, vorzugsweise 10- bis 25-molarer Überschuß an Wasser zweckmäßig sein. Die Reaktionstemperaturen betragen 80 bis 300°C, vorzugsweise 150 bis 250°C. Die Reaktionszeiten hängen von Substrat, Reaktionstemperatur und Druck ab und sind in der Regel im Bereich von 5 bis 40 Stunden, vorzugsweise 10 bis 35 Stunden.

Nach beendeter Umsetzung kann die Aufarbeitung in einfacher Weise, beispielsweise durch Abtrennung der Carbonsäure als Festkörper (z.B. Benzoesäure) oder durch Destillation (z.B. Essigsäure) erfolgen. Die anfallende Aminomethanphosphonsäure bzw. die Aminomethylphosphinsäuren haben in der Regel bereits eine hohe Reinheit. Sie können erforderlichenfalls nach üblichen Methoden, vorzugsweise durch Kristallisation, hochrein erhalten werden.

### Beispiel 1

20 g (0,093 Mol) Benzoylaminomethanphosphonsäure und 20 g Wasser wurden in ein Bombenrohr gegeben und 20 Stunden bei 200°C gehalten. Nach dem Abkühlen wurde das Reaktionsgut mit 100 ml Wasser digeriert. Anschließend wurde die Benzoesäure abgesaugt. Das Filtrat wurde im Vakuum bis zu einer Innentemperatur von 75°C destillativ eingeengt. Es verblieben 10,3 g (100 % d. Th.) Aminomethanphosphonsäure, die nach Analyse anhand eines ³¹P-NMR-Spektrums eine 95 %ige Reinheit aufwies.

### Beispiel 2

20 g (0,093 Mol) Benzoylaminomethanphosphonsäure und 20 g Wasser wurden in ein Bombenrohr gegeben und 20 Stunden bei 150°C gehalten. Dann wurde nach dem Abkühlen das Reaktionsgut mit Methanol digeriert und abgesaugt. Man erhielt 8,2 g (80 % d. Th.) Aminomethanphosphonsäure mit einem Zersetzungspunkt von 310°C.

### Beispiel 3

20 g (0,093 Mol) Benzoylaminomethanphosphonsäure und 20 g Wasser wurden 30 Stunden am Rückfluß gehalten. Nach dem Abkühlen wurde das Reaktionsgut mit 100 ml Methanol digeriert und abgesaugt. Man erhielt 5,3 g (52 % d. Th.) Aminomethanphosphonsäure mit einem Zersetzungspunkt von 275 °C. Aus dem Filtrat konnte nicht umgesetzte Benzoylaminomethanphosphonsäure isoliert werden.

### Beispiel 4

21,3 g (0,1 Mol) Benzoylaminomethyl-methyl-phosphinsäure und 42 g Wasser wurden in ein Bombenrohr gegeben und 20 Stunden bei 200°C gehalten. Nach dem Abkühlen wurde mit Wasser digeriert und von der Benzoesäure abgesaugt. Das Filtrat wurde im Vakuum bis zur Trockne eingeengt. Der kristalline Rückstand wurde mit Methanol digeriert und abgesaugt. Man erhielt 8 g (73 % d. Th.) Aminomethyl-methyl-phosphinsäure mit einem Schmelzpunkt von 255-261°C.

### Beispiel 5

20 g (0,073 Mol) Benzoylaminomethyl-phenyl-phosphinsäure und 40 ml Wasser wurden in ein Bombenrohr gegeben und 23 Stunden bei 225°C gehalten. Dann wurde die Benzoesäure abgesaugt und mit Wasser nachgespült. Das Filtrat wurde im Vakuum bis zur Trockne eingeengt. Es verblieben 12,5 g (100 % d. Th.) rohe Aminomethyl-phenyl-phosphinsäure. Nach dem Digerieren mit Methanol wurde sie mit einem Schmelzpunkt von 276-278°C erhalten.

### Beispiel 6

14,4 g (0,094 Mol) Acetylaminomethanphosphonsäure und 28 g Wasser wurden in ein Bombenrohr gefüllt und 20 Stunden bei 200°C gehalten. Dann wurde abgekühlt und die resultierende Reaktionslösung im Vakuum von Wasser und Essigsäure befreit. Der Rückstand wurde mit einer Mischung aus 30 ml Methanol und 1 ml Wasser digeriert. Man erhielt 9,6 g (92 % d. Th) Aminomethanphosphonsäure mit einem Zersetzungspunkt von 270-278°C.

## Patentansprüche

1. Verfahren zur Herstellung von Verbindungen der Formel I, 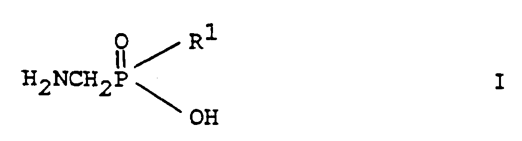 worin R¹ Hydroxy, C₁-C₄-Alkyl oder Phenyl bedeutet, dadurch gekennzeichnet, daß man Acylaminomethanphosphon- bzw. Acylaminomethyl-phosphinsäuren der allgemeinen Formel II, 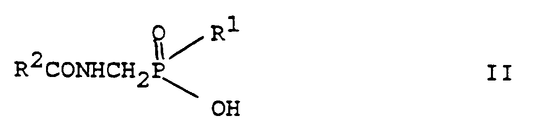 worin R² Wasserstoff, Alkyl mit 1 bis 6 C-Atomen, Benzyl oder Phenyl, das unsubstituiert oder durch ein oder mehrere Reste aus der Gruppe C₁-C₄-Alkyl, C₁-C₄-Alkoxy und Halogen substituiert ist, bedeutet und R¹ die obengenannte Bedeutung hat, mit Wasser bei 80 bis 300°C umsetzt.

2. Verfahren nach Anspruch 1, dadurch gekennzeichnet, daß R¹ Hydroxy bedeutet.

3. Verfahren nach Anspruch 1, dadurch gekennzeichnet, daß R¹ Methyl, Ethyl oder Phenyl bedeutet.

4. Verfahren nach Anspruch 1, 2 oder 3, dadurch gekennzeichnet, daß R² H, C₁-C₃-Alkyl, Benzyl oder Phenyl bedeutet.

5. Verfahren nach Anspruch 1, 2 oder 3, dadurch gekennzeichnet, daß R² Phenyl bedeutet.

6. Verfahren nach einem oder mehreren der Ansprüche 1 bis 5, dadurch gekennzeichnet, daß die Reaktionstemperatur 150 bis 250°C beträgt.

7. Verfahren nach einem oder mehreren der Ansprüche 1 bis 6, dadurch gekennzeichnet, daß ein 2- bis 30-molarer Überschuß an Wasser, bezogen auf 1 Mol Verbindung der Formel II, eingesetzt wird.

8. Verfahren nach einem oder mehreren der Ansprüche 1 bis 7, dadurch gekennzeichnet, daß die Reaktionszeit im Bereich von 5 bis 40 Stunden ist.

## Claims

1. A process for the preparation of compounds of the formula I 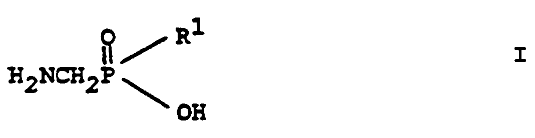 in which R¹ is hydroxyl, C₁-C₄-alkyl or phenyl, which comprises reacting acylaminomethanephosphonic or acylaminomethylphosphinic acids of the formula II 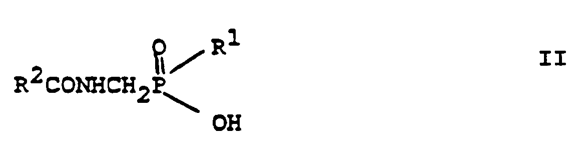 in which R² is hydrogen, alkyl having 1 to 6 carbon atoms, benzyl or phenyl, unsubstituted or substituted by one or more radicals from the group comprising C₁-C₄-alkyl, C₁-C₄-alkoxy and halogen, and R¹ is as defined above, with water, at 80 to 300°C.

2. The process as claimed in claim 1, wherein R¹ is hydroxyl.

3. The process as claimed in claim 1, wherein R¹ is methyl, ethyl or phenyl.

4. The process as claimed in claim 1, 2 or 3, wherein R² is H, C₁-C₃-alkyl, benzyl or phenyl.

5. The process as claimed in claim 1, 2 or 3, wherein R² is phenyl.

6. The process as claimed in one or more of claims 1 to 5, wherein the reaction temperature is 150 to 250°C.

7. The process as claimed in one or more of claims 1 to 6, wherein a 2 to 30 molar excess of water, based on 1 mol of compound of the formula II, is employed.

8. The process as claimed in one or more of claims 1 to 7, wherein the reaction time is in the range from 5 to 40 hours.

## Revendications

1. Procédé pour la préparation de composés de formule I 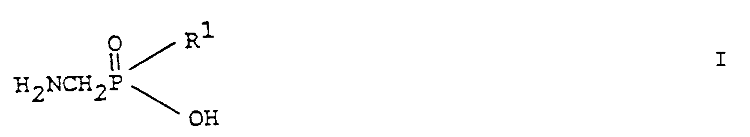 dans laquelle R¹ représente un hydroxy, un alkyle en C₁-C₄ ou le phényle, caractérisé en ce qu'on fait réagir les acides acylaminométhanephosphoniques, respectivement acylaminométhylphosphinique de formule générale II 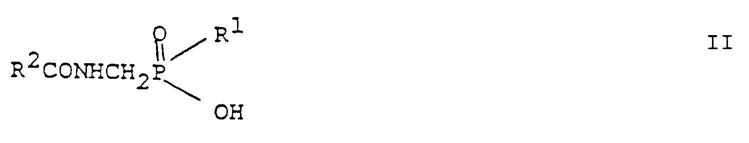 où R² représente l'hydrogène, un alkyle avec 1 à 6 atomes de carbone, le benzyle ou le phényle, qui est non-substitué ou substitué par un ou plusieurs radicaux pris dans le groupe des alkyle en C₁-C₄, alcoxy en C₁-C₄ et halogènes, et R¹ a la signification donnée ci-dessus, avec de l'eau, à une température de 80 à 300°C.

2. Procédé selon la revendication 1, caractérisé en ce que R¹ représente l'hydroxy.

3. Procédé selon la revendication 1, caractérisé en ce que R¹ représente le méthyle, l'éthyle ou le phényle.

4. Procédé selon la revendication 1, 2 ou 3, caractérisé en ce que R² représente H, un alkyle en C₁-C₃, le benzyle ou le phényle.

5. Procédé selon la revendication 1, 2 ou 3, caractérisé en ce que R² représente le phényle.

6. Procédé selon une ou plusieurs des revendications 1 à 5, caractérisé en ce que la température de réaction est de 150 à 250°C.

7. Procédé selon une ou plusieurs des revendications 1 à 6, caractérisé en ce qu'on utilise un excès en eau de 2 à 30 fois molaire, par rapport à 1 mole de composé de formule II.

8. Procédé selon une ou plusieurs des revendications 1 à 7, caractérisé en ce que la durée de réaction se situe dans le domaine de 5 à 40 heures.
